# DEMANDE DE BREVET EUROPEEN

(11) **EP 4 254 575 A1**
(43) Date de publication de la demande: **04.10.2023**
(21) Numéro de dépôt: 22305413.1
(22) Date de dépôt: 31.03.2022
(51) Int. Cl.: H01M 10/04, H01M 50/209, H01M 50/249, H01M 50/264

(54) **BATTERIE AVEC SERRAGE LONGITUDINAL POUR VÉHICULE ÉLECTRIQUE OU HYBRIDE, ET PROCÉDÉ D ASSEMBLAGE D'UNE TELLE BATTERIE**

(71) Demandeur: Automotive Cells Company SE, 92300 Levallois Perret (FR)
(72) Inventeur: CHAUVEAU, Pierre, 33520 BRUGES (FR); MATHIEU, Alexandre, 33300 BORDEAUX (FR); BRIEN, Patrick, 33290 PAREMPUYRE (FR); MARATHE, Dimitri, 33140 VILLENAVE D'ORNON (FR)
(74) Mandataire: Lavoix

(57) **Abrégé**

Batterie (10) pour véhicule électrique ou hybride, comprenant :
- un boîtier (12) définissant un logement (14) s'étendant dans une direction longitudinale (X) et dans une direction transversale (Y),
- une pluralité de traverses (16) rapportées sur le boîtier et s'étendant dans la direction transversale entre un premier bord latéral (18) et un deuxième bord latéral (20) du boîtier, et
- une pluralité d'ensembles (22) comportant des cellules électrochimiques (24) s'étendant successivement dans la direction transversale et solidarisées entre elles,
les traverses et les ensembles étant disposés successivement dans le logement les uns contre les autres dans la direction longitudinale de sorte qu'il n'existe pas de jeu mécanique entre les traverses et les ensembles, les ensembles et/ou les traverses étant fixés sur le boîtier.

## Description

La présente invention concerne une batterie électrique.

L'invention concerne également un procédé d'assemblage des éléments d'une telle batterie.

L'invention s'applique en particulier à la réalisation d'une batterie, notamment pour véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres, et un empilement d'électrodes négatives reliées les unes aux autres, séparées par un séparateur, connus sous le terme de « stack ». Les électrodes positives reliées les unes aux autres forment une borne positive, et les électrodes négatives reliées les unes aux autres forment une borne négative.

La batterie comporte en général un boîtier participant à la protection de ses éléments internes, en particulier les cellules électrochimiques et les connecteurs électriques. Afin de permettre à la batterie de résister à des chocs, par exemple latéraux, éventuellement subis par le véhicule, le boîtier inclut des traverses fixes s'étendant entre deux bords latéraux du boîtier opposés l'un à l'autre selon une direction transversale, par exemple celle du véhicule. Les traverses sont par exemple extrudées en même temps que d'autres parties du boîtier. Le boîtier prédéfinit ainsi plusieurs compartiments dans lesquels les modules sont respectivement placés lors de l'assemblage de la batterie.

Toutefois, afin de pouvoir insérer correctement les modules dans les compartiments, les compartiments sont dimensionnés pour autoriser un jeu fonctionnel entre les traverses et les modules. Les jeux sont typiquement d'environ 5 mm de part et d'autre des traverses.

En outre, les traverses elles-mêmes, afin de résister aux efforts que le choc latéral pourrait provoquer, sont dimensionnées pour résister au flambement. Typiquement, cela se fait grâce à un tube rectangulaire de 25 mm de largeur et de quelques millimètres d'épaisseur, généralement en métal.

Ainsi, deux modules consécutifs longitudinalement sont typiquement séparés par un espace s'étendant sur au moins 35 mm (25 mm + 2 x 5 mm) et ne stockant pas d'énergie. Ceci a un impact négatif sur la compacité de la batterie et sa densité énergétique, par exemple exprimée en W.h/L (watt.heure par litre).

Un but de l'invention est donc de fournir une batterie présentant une meilleure densité énergétique, tout en conservant une résistance comparable aux chocs latéraux éventuellement subis par le véhicule.

A cet effet, l'invention a pour objet une batterie pour véhicule électrique ou hybride, la batterie comprenant :
- un boîtier définissant un logement s'étendant dans une direction longitudinale et dans une direction transversale perpendiculaire à la direction longitudinale,
- une pluralité de traverses rapportées sur le boîtier et s'étendant dans la direction transversale entre un premier bord latéral et un deuxième bord latéral du boîtier opposés l'un à l'autre transversalement, et
- une pluralité d'ensembles, chacun des ensembles comportant des cellules électrochimiques s'étendant successivement dans la direction transversale et solidarisées entre elles,
   les traverses et les ensembles étant disposés successivement dans le logement les uns contre les autres dans la direction longitudinale de sorte qu'il n'existe pas de jeu mécanique entre les traverses et les ensembles, les ensembles et/ou les traverses étant fixés sur le boîtier.

Selon des modes particuliers de réalisation, la batterie comprend l'une ou plusieurs des caractéristiques suivantes, prise(s) isolément ou selon toutes les combinaisons techniquement possibles :
- au moins certaines des traverses comprennent une première partie située longitudinalement entre deux des ensembles et présentant une épaisseur de matière dans la direction longitudinale inférieure à 20 mm, de préférence inférieure à 10 mm ;
- le boîtier comprend un fond, au moins certaines des traverses:
   - comprenant une deuxième partie fixée sur la première partie du côté opposé au fond selon une troisième direction perpendiculaire à la direction longitudinale et à la direction transversale, ou
   - comprenant une deuxième partie fixée sur la première partie du côté opposé au fond selon la troisième direction, et au moins deux couches de matériau souple fixées sur la deuxième partie, la deuxième partie butant sur deux des ensembles par l'intermédiaire des deux couches de matériau souple ;
- au moins certaines des traverses présentent, perpendiculairement à la direction transversale, une section en « T » ou en « H » ;
- chacun des ensembles comprend en outre une plaque centrale s'étendant perpendiculairement à la direction transversale, les cellules électrochimiques étant situées transversalement de part et d'autre de la plaque centrale ;
- chacun des ensembles comprend en outre : deux plaques latérales s'étendant perpendiculairement à la direction longitudinale et situées de part et d'autre des cellules électrochimiques longitudinalement ; et au moins deux couches de colle ou deux couches d'un matériau souple situées longitudinalement entre les cellules électrochimiques et les deux plaques latérales respectivement ;
- chacun des ensembles comprend en outre deux plaques extrémales s'étendant perpendiculairement à la direction transversale et situées de part et d'autre des cellules électrochimiques transversalement, la batterie comprenant en outre des tirants longitudinaux, les tirants s'étendant respectivement à travers des logements définis par les deux plaques extrémales et à travers des orifices définis par des extrémités transversales des traverses ;
- chacune des deux plaques extrémales comprend au moins un pion sur une première face, et définit au moins un orifice sur une deuxième face opposée longitudinalement à la première face, le pion d'une des deux plaques extrémales d'un des ensembles étant situé dans l'orifice d'une des deux plaques extrémales d'un autre des ensembles ;
- ledit pion sur la première face comprend une partie tronconique ou triangulaire et traverse un orifice intermédiaire défini par l'une des traverses, ladite partie et ledit orifice intermédiaire étant adaptés pour déplacer ladite traverse vers le boîtier selon une troisième direction perpendiculaire à la direction longitudinale et à la direction transversale par effet de came lorsque ledit pion est inséré longitudinalement dans ledit orifice sur la deuxième face ;
- la batterie comprend en outre des cornières soudées sur des extrémités transversales des traverses et fixée sur le boîtier, les cornières étant adaptées pour transmettre des efforts transversaux entre les traverses et le boîtier ; et
- le boîtier définit un ou plusieurs rails longitudinaux adaptés pour faciliter un guidage des ensembles et des traverses lors d'un assemblage de la batterie, et/ou pour servir de support de fixation aux ensembles et/ou aux traverses.

L'invention a aussi pour objet un procédé d'obtention d'assemblage d'une batterie telle que décrite ci-dessus, comprenant:
- un serrage des traverses et des ensembles les uns contre les autres dans une direction de serrage pour obtenir un système serré dans lequel les traverses s'étendent dans une direction transversale de montage perpendiculaire à la direction de serrage, les cellules électrochimiques de chacun des ensembles s'étendant successivement dans la direction transversale de montage, les traverses et les ensembles étant situés successivement dans la direction de serrage, et
- une fixation sur le boîtier des traverses et/ou des ensembles pour obtenir un système fixé, le système fixé étant situé dans le logement et orienté par rapport au boîtier de sorte que la direction de serrage soit parallèle à la direction longitudinale définie par la batterie à l'état assemblé, et que la direction transversale de montage soit parallèle à la direction transversale définie par la batterie à l'état assemblé, les traverses du système fixé s'étendant entre le premier bord latéral et le deuxième bord latéral du boîtier et étant rapportées sur le boîtier.

Selon des modes particuliers de réalisation, le procédé comprend l'une ou plusieurs des caractéristiques suivantes, prise(s) isolément ou selon toutes les combinaisons techniquement possibles :
- le serrage des traverses et des ensembles les uns contre les autres est réalisé dans le logement, la direction de serrage étant parallèle à la direction longitudinale et la direction transversale de montage étant parallèle à la direction transversale pendant le serrage ;
- le serrage comprend des sous-étapes de serrage de manière à obtenir le système serré progressivement par agrégations successives de certaines des traverses et des certains des ensembles dans le temps, et la fixation comprend des sous étapes de fixation, chacune des sous-étapes de fixation suivant une des sous-étapes de serrage dans le temps, pour fixer progressivement dans le temps le système serré ; et
- le serrage des traverses et des ensembles les uns contre les autres est réalisé hors du logement, le système serré comprenant des tirants s'étendant dans la direction de serrage et des organes de serrage, les traverses et les ensembles étant enfilés sur les tirants, et les organes de serrage étant disposés sur les tirants pour comprimer les ensembles et les traverses dans la direction de serrage, et la fixation sur le boîtier du système serré comprend un déplacement en bloc du système serré dans le logement.

L'invention sera mieux comprise à la lecture de la description qui va suivre, donnée uniquement à titre d'exemple et faite en se référant aux dessins annexés, sur lesquels :
- la figure 1 est une vue en perspective d'une batterie selon l'invention,
- la figure 2 est une vue en perspective de la batterie représentée sur la figure 1, certains des ensembles ayant été omis, et certaines cellules électrochimiques et connecteurs électriques ayant été omis pour l'un des ensembles représentés,
- la figure 3 est une vue en perspective d'un des ensembles de la batterie représentée sur la figure 1,
- la figure 4 est une vue de la batterie représentée sur la figure 1, en coupe selon un plan perpendiculaire à la direction transversale,
- la figure 5 est une vue en perspective d'une partie de la batterie représentée sur la figure 1, le boîtier étant omis afin de mieux montrer les cornières, et
- la figure 6 est une vue en perspective d'une traverse et deux cornières de la batterie représentée sur la figure 1, sous un autre angle comparé à la figure 5.

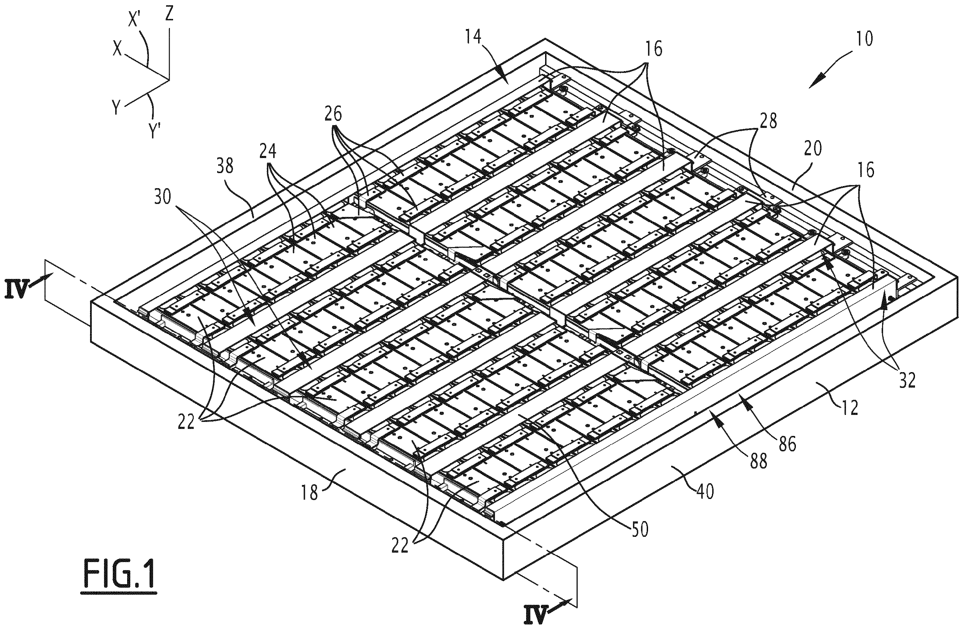

En référence aux figures 1 à 6, on décrit une batterie 10 selon l'invention.

La batterie 10 est par exemple destinée à prendre place dans un véhicule automobile électrique ou hybride (non représenté).

Comme visible sur la figure 1, la batterie 10 comprend un boîtier 12 définissant un logement 14 s'étendant dans une direction longitudinale X qui est par exemple la direction d'avancée du véhicule, et dans une direction transversale Y perpendiculaire à la direction longitudinale et qui est par exemple la direction transversale du véhicule.

Optionnellement, la batterie 10 comprend un couvercle, non représenté, pour fermer le boîtier 12.

En variante, la batterie 10 est sans couvercle et avantageusement montée en lien direct avec le plancher du véhicule. La batterie 10 est par exemple collée sur une surface inférieure du plancher.

On définit en outre une troisième direction Z perpendiculaire à la direction longitudinale X et à la direction transversale Y, et qui est par exemple destinée à être sensiblement verticale lorsque le véhicule se situe sur une surface horizontale (non représentée).

La batterie 10 comprend en outre une pluralité de traverses 16 rapportées sur le boîtier 12 et s'étendant dans la direction transversale Y entre un premier bord latéral 18 et un deuxième bord latéral 20 du boîtier opposés l'un à l'autre transversalement. La batterie comprend aussi une pluralité d'ensembles 22, chacun des ensembles comportant des cellules électrochimiques 24 s'étendant successivement dans la direction transversale Y et solidarisées mécaniquement entre elles.

La batterie 10 comprend aussi des connecteurs électriques 26 disposés dans les ensembles pour connecter les cellules électrochimiques 24 entre elles, et entre les ensembles 22 pour connecter les ensembles entre eux.

Avantageusement, la batterie 10 comprend en outre des cornières 28 fixées, par exemple soudées, sur des extrémités transversales 30, 32 des traverses 16 et fixées sur le boîtier.

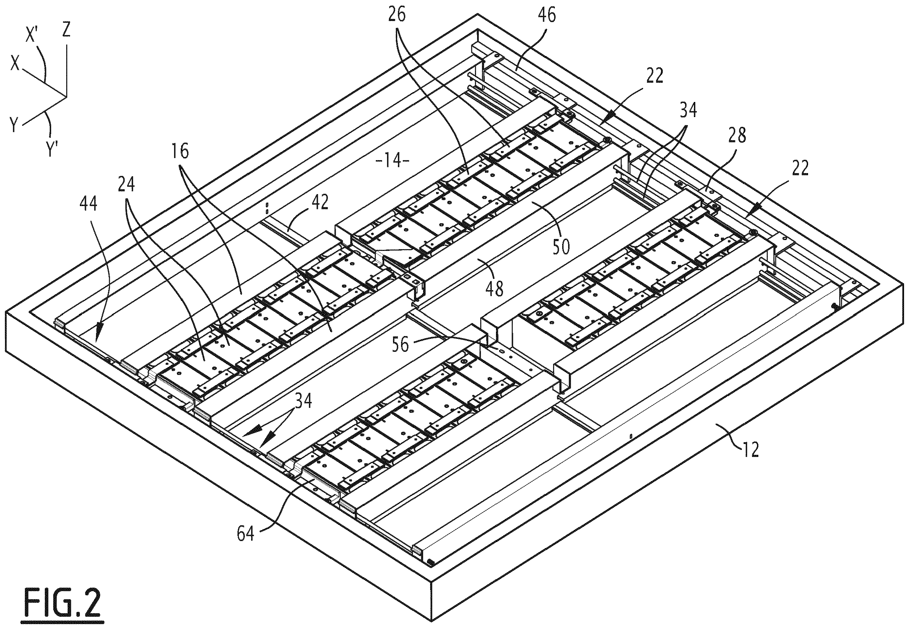

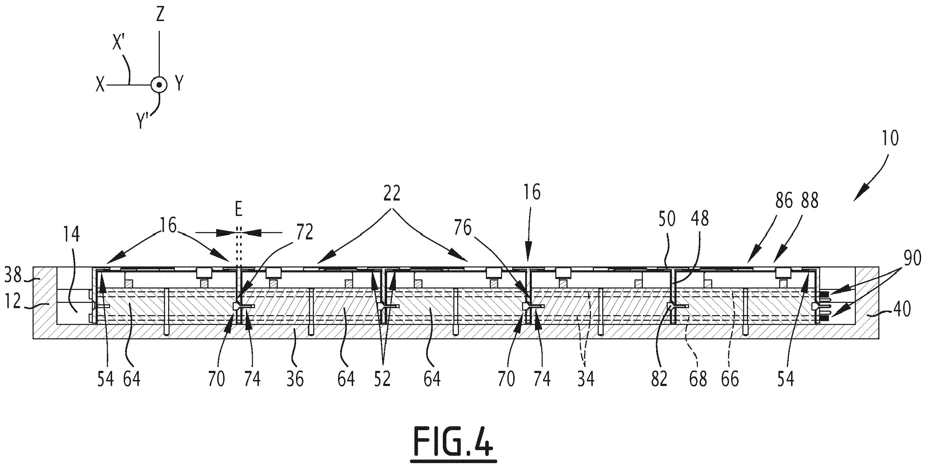

Selon un mode de réalisation particulier, la batterie 10 comprend en outre des tirants 34 (figures 2 et 4) longitudinaux dont le rôle dans l'assemblage de la batterie sera expliqué plus bas.

La batterie 10 comprend aussi des organes de fixation (non représentés), tels que des vis, pour fixer les ensembles 22 et les traverses 16 sur le boîtier 12.

Dans l'exemple, la batterie 10 comprend cinq ensembles 22 et six traverses 16. Quatre des six traverses 16 sont intercalées longitudinalement entre les ensembles 22, et deux traverses sont dites « extrémales » longitudinalement, car elles ne longent respectivement qu'un seul des ensembles.

Selon d'autres modes de réalisation non représentés, le nombre d'ensembles 22 est de moins de cinq ou de plus de cinq, et le nombre de traverses 16 est de moins de six ou de plus de six.

Selon une variante (non représentée), chacune des traverses 16 est située longitudinalement entre deux des ensembles 22. Le nombre des traverses 16 est alors égal au nombre des ensembles 22 moins un.

Le boîtier 12 présente par exemple une forme parallélépipédique, avantageusement aplatie dans la troisième direction Z, car la batterie est par exemple destinée à être intégrée en partie inférieure du véhicule, par exemple sous un habitacle.

Outre le premier bord latéral 18 et le deuxième bord latéral 20, le boîtier 12 comprend un fond 36, et un troisième bord latéral 38 et un quatrième bord latéral 40 opposés l'un à l'autre dans la direction longitudinale X.

Contrairement à l'état de la technique, le boîtier 12 ne prédéfinit pas de compartiments successifs longitudinalement, dans lesquels les ensembles 22 seraient insérés.

Le boîtier 12 définit par exemple des rails longitudinaux 42, 44, 46 (figure 2) adaptés pour faciliter un guidage des ensembles 22 et des traverses 16 lors d'un montage de la batterie 10, et pour servir de support de fixation aux ensembles et aux traverses.

Le rail 42 s'étend par exemple en saillie sur le fond 36.

Par exemple, les rails 44, 46 s'étendent respectivement sur le premier bord latéral 18 et sur le deuxième bord latéral 20.

Les traverses 16 et les ensembles 22 sont disposés successivement dans le logement 14 les uns contre les autres dans la direction longitudinale X, de sorte qu'il n'existe pas de jeu mécanique entre ces éléments successifs, les ensembles et les traverses étant fixés sur le boîtier 12. Ainsi, les traverses 16 sont plus résistantes au flambement en cas de choc latéral (dans la direction transversale Y) sur le véhicule, car elles sont maintenues par les ensembles 22.

Dans l'exemple, les traverses 16 et les ensembles 22 forment une alternance simple (un ensemble 22 suivi d'une traverse 16 suivie d'un ensemble 22... etc).

Selon des variantes non représentée, l'alternance peut être plus complexe (par exemple deux ensembles 22 suivis d'une traverse 16 suivie de deux ensembles 22... etc).

Selon d'autres variantes encore, l'alternance peut être irrégulière (par exemple un ensemble 22 suivi d'une traverse 16 suivie de deux ensembles 22 suivis d'une traverse 16...).

Plus généralement, les traverses 16 peuvent séparer un ou deux ensembles 22, voire plus, ou se situer en position extrémale (i.e. avec un ensemble 22 seulement d'un côté).

Contrairement à l'état de la technique, les traverses 16 ne sont pas préexistantes ou préinstallées dans le boîtier 12. Lorsque les ensembles 22 sont installés, il n'existe pas de compartiments prédéfinis qui nécessiteraient un jeu mécanique entre les ensembles 22 et les traverses 16. Les traverses 16 sont installées de manière concomitante avec les ensembles 22.

Au moins certaines des traverses 16, dans l'exemple celles qui ne sont pas extrémales, présentent, perpendiculairement à la direction transversale Y, une section en « T » (figure 4).

Selon des variantes non représentées, la section est en « H », en « C », ou forme un rectangle (la traverse est alors tubulaire).

Dans l'exemple, les traverses 16 extrémales ont une section différente de celle des traverses non extrémales, par exemple en « C ».

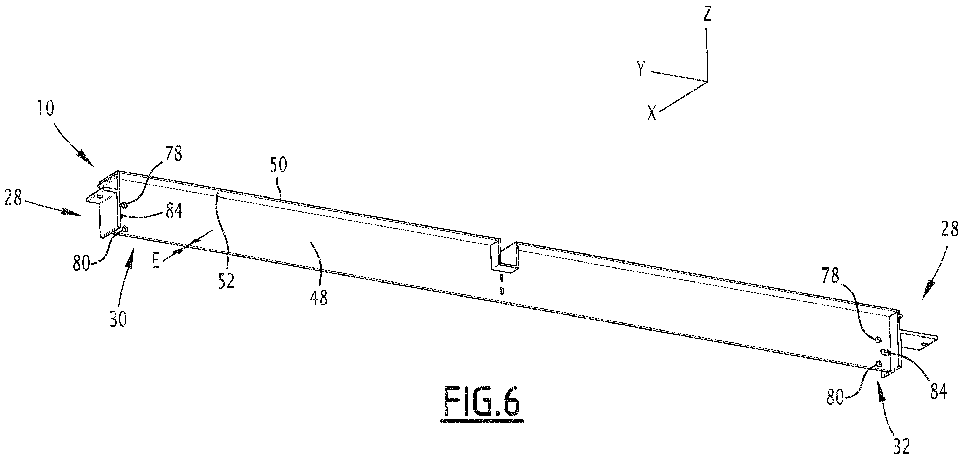

Comme visible sur les figures 4 et 6, les traverses 16 comprennent par exemple une première partie 48 s'étendant perpendiculairement à la direction longitudinale X. Dans l'exemple, toutes les traverses 16 comprennent en outre une deuxième partie 50 solidaire de la première partie du côté opposé au fond 36.

La première partie 48 des traverses 16 non extrémales est située longitudinalement entre deux des ensembles 22. La première partie 48 de toutes les traverses 16 présente avantageusement une épaisseur E de matière dans la direction longitudinale X inférieure à 20 mm, de préférence inférieure à 10 mm. Ainsi, deux ensembles 22 consécutifs longitudinalement sont séparés de moins de 20 mm, avantageusement de moins de 10 mm.

La deuxième partie 50 s'étend par exemple perpendiculairement à la troisième direction Z.

La deuxième partie 50 est par exemple venue de matière avec la première partie 48.

La deuxième partie 50 des traverses 16 non extrémales bute sur deux des ensembles 22 selon la troisième direction Z par l'intermédiaire de deux couches 52 de matériau souple, par exemple une mousse.

En variante, la deuxième partie 50 bute directement sur les ensembles 22.

La deuxième partie 50 des traverses 16 extrémales bute sur un seul des ensembles 22, par l'intermédiaire d'une couche 54 de matériau souple, ou en variante directement.

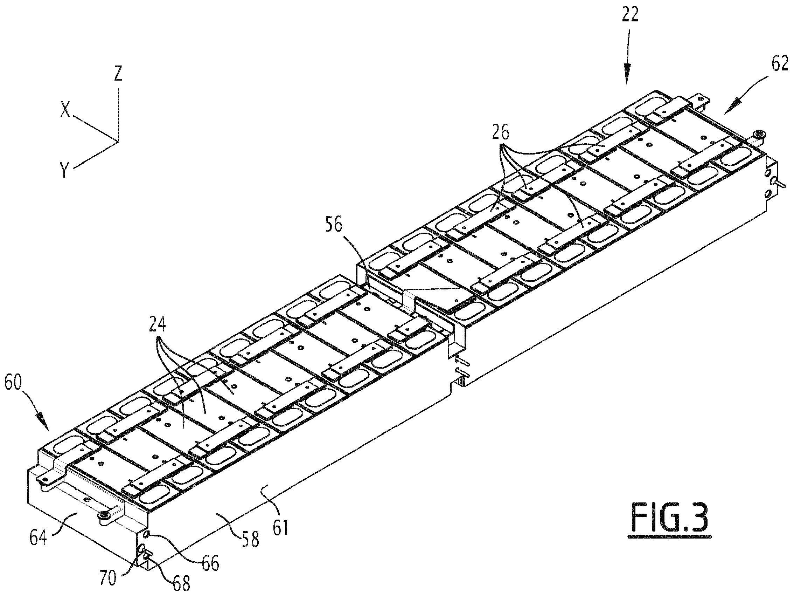

Dans l'exemple, chacun des ensembles 22 comprend une plaque centrale 56 (figures 2 et 3) s'étendant perpendiculairement à la direction transversale Y, les cellules électrochimiques 24 étant situées transversalement de part et d'autre de la plaque centrale.

Chacun des ensembles 22 comprend par exemple deux plaques latérales 58, 60 (figure 3) s'étendant perpendiculairement à la direction longitudinale X et situées de part et d'autre des cellules électrochimiques 24 longitudinalement, et au moins deux couches de colle 61 ou deux couches d'un matériau souple (non représentées) situées longitudinalement entre les cellules électrochimiques 24 et les deux plaques latérales 58, 60 respectivement.

Chacun des ensembles 22 comprend par exemple deux plaques extrémales 62, 64 s'étendant perpendiculairement à la direction transversale Y, de part et d'autre des cellules électrochimiques 24 transversalement.

Les plaques centrales 56 sont avantageusement adaptées pour résister à des efforts longitudinaux qui leur seraient appliqués par les traverses 16, et contribuent donc à réduire le risque de flambement des traverses en cas de choc latéral sur le véhicule. Les plaques 56 forment avantageusement des entretoises entre les traverses 16

Chacune des deux plaques extrémales 62, 64 définit avantageusement deux logements 66, 68 longitudinaux traversants.

Chacune des deux plaques extrémales 62, 64 comprend au moins un pion 70 (figures 3 et 4) sur une première face 72, et définit au moins un orifice 74 sur une deuxième face 76 opposée longitudinalement à la première face, le pion 70 d'une des deux plaques extrémales 62, 64 d'un des ensembles 22 étant situé dans l'orifice 74 d'une des deux plaques 62, 64 extrémales d'un autre des ensembles 22.

Les tirants 34 s'étendent dans les logements 66, 68 définis par les plaques extrémales 62, 64, et passent par des orifices 78, 80 définis par les extrémités transversales 30, 32 des traverses 16. Dans l'exemple, les tirants 34 traversent aussi les deux plaques latérales 58, 60 de chacun des ensembles 22.

Chacun des pions 70 sur la première face 72 comprend par exemple une partie 82 tronconique ou triangulaire et traverse un orifice intermédiaire 84 (figure 6) défini par chacune des traverses 16. Ladite partie 82 et ledit orifice intermédiaire 84 sont adaptés pour déplacer les traverses 16 vers le boîtier 12 selon la troisième direction Z par effet de came lorsque ledit pion 70 est inséré longitudinalement dans ledit orifice 74 sur la deuxième face 76.

En variante (non représentée), les pions sont par exemple cylindriques.

Les cornières 28 sont avantageusement adaptées pour transmettre des efforts transversaux entre les traverses 16 et le boîtier 12.

Dans l'exemple, au moins les cornières 28 et les plaques extrémales 62, 64 sont vissées sur le boîtier 12.

On va maintenant décrire un premier procédé d'assemblage de la batterie 10.

Le premier procédé comprend une étape de serrage des traverses 16 et des ensembles 22 les uns contre les autres dans une direction de serrage X' pour obtenir un système serré 86, et une étape de fixation sur le boîtier 12 des traverses 16 et/ou des ensembles 22 pour obtenir un système fixé 88.

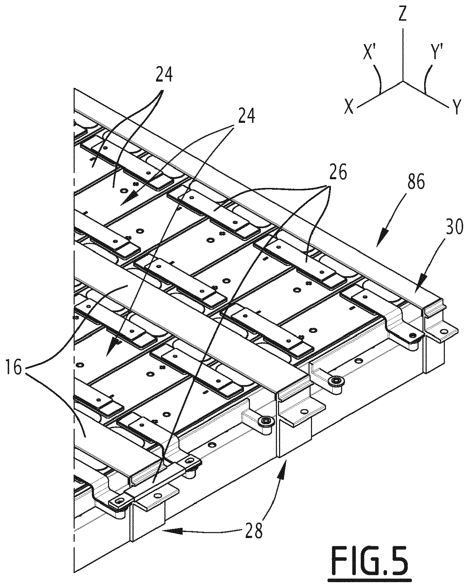

Dans le système serré 86 (figure 5), les traverses 16 s'étendent dans une direction transversale de montage Y' perpendiculaire à la direction de serrage X'. Les cellules électrochimiques 24 de chacun des ensembles 22 s'étendent successivement dans la direction transversale de montage Y'. Les traverses 16 et les ensembles 22 sont situés successivement dans la direction de serrage X' en formant une alternance simple dans l'exemple.

Le système fixé 88 (figure 1) est situé dans le logement 14 et orienté par rapport au boîtier 12 de sorte que la direction de serrage X' soit parallèle à la direction longitudinale X définie par la batterie 10 à l'état assemblé, et que la direction transversale de montage Y' soit parallèle à la direction transversale Y définie par la batterie à l'état assemblé. Les traverses 16 du système fixé 88 s'étendent entre le premier bord latéral 18 et le deuxième bord latéral 20 du boîtier 12 et sont rapportées sur le boîtier 12.

Dans le premier procédé, le serrage des traverses 16 et des ensembles 22 les uns contre les autres est avantageusement réalisé dans le logement 14. La direction de serrage X' est parallèle à la direction longitudinale X, et la direction transversale de montage Y' est parallèle à la direction transversale Y dès l'étape de serrage.

Avantageusement, les rails 42, 44, 46 facilitent le positionnement et le serrage des ensembles 22 et des traverses 16. Les cornières 28 peuvent glisser sur les rails 44, 46.

Les étapes de serrage et de fixation sont avantageusement imbriquées dans le temps. Avantageusement, le serrage comprend des sous-étapes de serrage de manière à obtenir le système serré 86 progressivement, par agrégations successives dans le temps. La fixation comprend des sous étapes de fixation, chacune des sous-étapes de fixation suivant une des sous-étapes de serrage dans le temps, pour fixer progressivement dans le temps le système serré 86.

Par exemple, les ensembles 22 et les traverses 16 sont serrés, puis fixés, un par un. Chaque nouvel élément est serré dans le logement 14 contre les précédents dans la direction longitudinale X, et fixé sur le boîtier 12.

En variante, les éléments sont ajoutés par groupes de plus d'un élément, par exemple deux éléments ou plus.

Les plaques extrémales 62, 64 de chacun des ensembles 22, et les cornières 28 sont par exemple vissées sur le boîtier 12. Ainsi, les traverses 16 sont avantageusement fixées par l'intermédiaire les cornières 28.

Selon des modes de réalisation particuliers, d'autres éléments des ensembles 22, ou des parties des traverses 16 sont fixés sur le boîtier 12.

On va maintenant décrire un deuxième procédé d'assemblage de la batterie 10. Le deuxième procédé est analogue au premier procédé, et comprend une étape de serrage et une étape de fixation. Seules les différences seront décrites en détail ci-après.

Dans le deuxième procédé, l'étape de serrage n'a pas lieu dans le logement 14, mais hors de celui-ci. Le serrage est par exemple complètement réalisé avant la fixation.

A l'étape de serrage, la direction de serrage X' et la direction transversale de montage Y' ne sont donc pas nécessairement parallèles respectivement à la direction longitudinale X et à la direction transversale Y, qui seront définies plus tard par la batterie 10 à l'état assemblé dans le logement. Dit de manière plus simple, le système serré 86 ne se situe pas dans le logement 14 et peut donc présenter une orientation quelconque par rapport au boîtier 12.

Le système serré 86 comprend avantageusement les tirants 34, qui s'étendent dans la direction de serrage X', et des organes de serrage 90.

Pour réaliser le serrage, les traverses 16 et les ensembles 22 sont par exemple enfilés sur les tirants 34. Puis, les organes de serrage 90 sont disposés sur les tirants 34 pour comprimer les ensembles 22 et les traverses 16 dans la direction de serrage X'. Par exemple, les organes de serrage 90 sont vissés sur une extrémité de chacun des tirants 34.

Par exemple, grâce aux pions 70 des plaques extrémales 62, 64, le placement des traverses 16 perpendiculairement à la direction de serrage X' et à la direction transversale de montage Y'est facilité.

Pour réaliser la fixation sur le boîtier 12, le système serré 86 est déplacé en bloc dans le logement 14. Puis, le système serré 86 est fixé sur le boîtier 12, par exemple à l'aide de vis, ce qui permet de rapporter les traverses 16 sur le boîtier 12.

Le deuxième procédé présente l'avantage que l'étape de serrage est réalisée sans être gênée ou contrainte par la présence du boîtier 12. Dans l'exemple, elle requiert des tirants 34, qui sont des pièces supplémentaires, mais garantissant un très bon serrage, bien homogène transversalement.

Grâce aux caractéristiques décrites ci-dessus, la batterie 10 présente une meilleure densité énergétique, tout en conservant une résistance au moins comparable aux chocs latéraux éventuellement subis par le véhicule.

En effet, les ensembles 22 ne sont pas insérés dans des compartiments prédéfinis par des traverses du boîtier 12. Les traverses 16 sont au contraire rapportées sur le boîtier 12 lors de l'assemblage de la batterie 10. Les traverses 16 et les ensembles 22 peuvent ainsi être serrés les uns contre les autres sans jeu. Que le serrage ait lieu dans le boîtier 12 (premier procédé) ou hors du boîtier 12 (deuxième procédé), la fixation des traverses 16 n'empêche pas ce bon serrage. Il en résulte que la distance entre deux ensembles 22 consécutifs longitudinalement est réduite. La densité énergétique de la batterie 10 s'en trouve augmentée.

En outre, du fait du serrage, les ensembles 22 limitent la possibilité que les traverses 16 subissent un flambement en cas de choc latéral, en empêchant que les traverses 16 se courbent dans la direction longitudinale X. Ainsi, il est possible de mettre œuvre des traverses 16 dont la première partie 48, située entre deux ensembles 22 consécutifs, est plus mince, toutes choses égales par ailleurs. Ceci permet à nouveau d'augmenter la densité énergétique de la batterie 10.

Les éventuelles plaques centrales 56 des ensembles 22 renforcent avantageusement cet effet.

Par exemple, si la première partie 48 présente une épaisseur E de matière inférieure à 20 mm, voire à 10 mm, deux ensembles 22 consécutifs ne sont séparés que de 20 mm, voire de 10 mm, ceci étant à comparer aux 35 mm mentionnés en préambule.

De plus, l'invention permet également un meilleur taux de charge de la batterie 10 en mode de charge rapide, un meilleur comportement de la batterie en cas d'emballement thermique, et une durée de vie plus longue des cellules électrochimiques 24, grâce à une amélioration de la dissipation de la chaleur et par une réduction du gradient de chaleur à l'intérieur des cellules électrochimiques.

## Revendications

1. Batterie (10) pour véhicule électrique ou hybride, la batterie (10) comprenant :
- un boîtier (12) définissant un logement (14) s'étendant dans une direction longitudinale (X) et dans une direction transversale (Y) perpendiculaire à la direction longitudinale (X),
- une pluralité de traverses (16) rapportées sur le boîtier (12) et s'étendant dans la direction transversale (Y) entre un premier bord latéral (18) et un deuxième bord latéral (20) du boîtier (12) opposés l'un à l'autre transversalement, et
- une pluralité d'ensembles (22), chacun des ensembles (22) comportant des cellules électrochimiques (24) s'étendant successivement dans la direction transversale (Y) et solidarisées entre elles,
les traverses (16) et les ensembles (22) étant disposés successivement dans le logement (14) les uns contre les autres dans la direction longitudinale (X) de sorte qu'il n'existe pas de jeu mécanique entre les traverses (16) et les ensembles (22), les ensembles (22) et/ou les traverses (16) étant fixés sur le boîtier (12).

2. Batterie (10) selon la revendication 1, dans laquelle au moins certaines des traverses (16) comprennent une première partie (48) située longitudinalement entre deux des ensembles (22) et présentant une épaisseur (E) de matière dans la direction longitudinale (X) inférieure à 20 mm, de préférence inférieure à 10 mm.

3. Batterie (10) selon la revendication 2, dans laquelle le boîtier (12) comprend un fond (36), au moins certaines des traverses (16):
- comprenant une deuxième partie (50) fixée sur la première partie (48) du côté opposé au fond (36) selon une troisième direction (Z) perpendiculaire à la direction longitudinale (X) et à la direction transversale (Y), ou
- comprenant une deuxième partie (50) fixée sur la première partie (48) du côté opposé au fond (36) selon la troisième direction (Z), et au moins deux couches (52) de matériau souple fixées sur la deuxième partie (50), la deuxième partie (50) butant sur deux des ensembles (22) par l'intermédiaire des deux couches (52) de matériau souple.

4. Batterie (10) selon l'une quelconque des revendication 1 à 3, dans laquelle au moins certaines des traverses (16) présentent, perpendiculairement à la direction transversale (Y), une section en « T » ou en « H ».

5. Batterie (10) selon l'une quelconque des revendication 1 à 4, dans laquelle chacun des ensembles (22) comprend en outre une plaque centrale (56) s'étendant perpendiculairement à la direction transversale (Y), les cellules électrochimiques (24) étant situées transversalement de part et d'autre de la plaque centrale (56).

6. Batterie (10) selon l'une quelconque des revendication 1 à 5, dans laquelle chacun des ensembles (22) comprend en outre :
- deux plaques latérales (58, 60) s'étendant perpendiculairement à la direction longitudinale (X) et situées de part et d'autre des cellules électrochimiques (24) longitudinalement, et
- au moins deux couches de colle (61) ou deux couches d'un matériau souple situées longitudinalement entre les cellules électrochimiques (24) et les deux plaques latérales (58, 60) respectivement.

7. Batterie (10) selon l'une quelconque des revendication 1 à 6, dans laquelle chacun des ensembles (22) comprend en outre deux plaques extrémales (62, 64) s'étendant perpendiculairement à la direction transversale (Y) et situées de part et d'autre des cellules électrochimiques (24) transversalement, la batterie (10) comprenant en outre des tirants (34) longitudinaux, les tirants (34) s'étendant respectivement à travers des logements (66, 68) définis par les deux plaques extrémales (62, 64) et à travers des orifices (78, 80) définis par des extrémités transversales (30, 32) des traverses (16).

8. Batterie (10) selon la revendication 7, dans laquelle chacune des deux plaques extrémales (62, 64) comprend au moins un pion (70) sur une première face (72), et définit au moins un orifice (74) sur une deuxième face (76) opposée longitudinalement à la première face (72), le pion (70) d'une des deux plaques extrémales (62, 64) d'un des ensembles (22) étant situé dans l'orifice (74) d'une des deux plaques extrémales (62, 64) d'un autre des ensembles (22).

9. Batterie (10) selon la revendication 8, dans laquelle ledit pion (70) sur la première face (72) comprend une partie (82) tronconique ou triangulaire et traverse un orifice intermédiaire (84) défini par l'une des traverses (16), ladite partie (82) et ledit orifice intermédiaire (84) étant adaptés pour déplacer ladite traverse vers le boîtier (12) selon une troisième direction (Z) perpendiculaire à la direction longitudinale (X) et à la direction transversale (Y) par effet de came lorsque ledit pion (70) est inséré longitudinalement dans ledit orifice (74) sur la deuxième face (76).

10. Batterie (10) selon l'une quelconque des revendication 1 à 9, comprenant en outre des cornières (28) soudées sur des extrémités transversales (30, 32) des traverses (16) et fixée sur le boîtier (12), les cornières (28) étant adaptées pour transmettre des efforts transversaux entre les traverses (16) et le boîtier (12).

11. Batterie (10) selon l'une quelconque des revendication 1 à 10, dans laquelle le boîtier (12) définit un ou plusieurs rails (42, 44, 46) longitudinaux adaptés pour faciliter un guidage des ensembles (22) et des traverses (16) lors d'un assemblage de la batterie (10), et/ou pour servir de support de fixation aux ensembles (22) et/ou aux traverses (16).

12. Procédé d'assemblage d'une batterie (10) telle que décrite par l'une quelconque des revendication 1 à 11, comprenant :
- un serrage des traverses (16) et des ensembles (22) les uns contre les autres dans une direction de serrage (X') pour obtenir un système serré (86) dans lequel les traverses (16) s'étendent dans une direction transversale de montage (Y') perpendiculaire à la direction de serrage (X'), les cellules électrochimiques (24) de chacun des ensembles (22) s'étendant successivement dans la direction transversale de montage (Y'), les traverses (16) et les ensembles (22) étant situés successivement dans la direction de serrage (X'), et
- une fixation sur le boîtier (12) des traverses (16) et/ou des ensembles (22) pour obtenir un système fixé (88), le système fixé (88) étant situé dans le logement (14) et orienté par rapport au boîtier (12) de sorte que la direction de serrage (X') soit parallèle à la direction longitudinale (X) définie par la batterie (10) à l'état assemblé, et que la direction transversale de montage (Y') soit parallèle à la direction transversale (Y) définie par la batterie (10) à l'état assemblé, les traverses (16) du système fixé (88) s'étendant entre le premier bord latéral (18) et le deuxième bord latéral (20) du boîtier (12) et étant rapportées sur le boîtier (12).

13. Précédé selon la revendication 12, dans lequel le serrage des traverses (16) et des ensembles (22) les uns contre les autres est réalisé dans le logement (14), la direction de serrage (X') étant parallèle à la direction longitudinale (X) et la direction transversale de montage (Y') étant parallèle à la direction transversale (Y) pendant le serrage.

14. Précédé selon la revendication 13, dans lequel :
- le serrage comprend des sous-étapes de serrage de manière à obtenir le système serré (86) progressivement par agrégations successives de certaines des traverses (16) et des certains des ensembles (22) dans le temps, et
- la fixation comprend des sous étapes de fixation, chacune des sous-étapes de fixation suivant une des sous-étapes de serrage dans le temps, pour fixer progressivement dans le temps le système serré (86).

15. Précédé selon la revendication 12, dans lequel :
- le serrage des traverses (16) et des ensembles (22) les uns contre les autres est réalisé hors du logement (14), le système serré (86) comprenant des tirants (34) s'étendant dans la direction de serrage (X') et des organes de serrage (90), les traverses (16) et les ensembles (22) étant enfilés sur les tirants (34), et les organes de serrage (90) étant disposés sur les tirants (34) pour comprimer les ensembles (22) et les traverses (16) dans la direction de serrage (X'), et
- la fixation sur le boîtier (12) du système serré (86) comprend un déplacement en bloc du système serré (86) dans le logement (14).
